# EUROPEAN PATENT SPECIFICATION

(11) **EP 3 095 324 B1**
(45) Date of publication and mention of the grant of the patent: **02.11.2022**
(21) Application number: 16168714.0
(22) Date of filing: 09.05.2016
(51) Int. Cl.: A01K 53/00

(54) **DEVICE FOR THE NUTRITION OF BEES**
VORRICHTUNG ZUR ERNÄHRUNG VON BIENEN
DISPOSITIF POUR LA NUTRITION DES ABEILLES

(30) Priority: 20.05.2015 IT UB20150665
(43) Date of publication of application: 23.11.2016
(73) Proprietor: Laped S.r.l., 35045 Ospedaletto Euganeo (PD) (IT)
(72) Inventor: Pastorello, Andrea, 34045 OSPEDALETTO EUGANEO (PD) (IT)
(74) Representative: De Filippis, Sara

(56) References cited:
- EP-A1- 0 062 955
- NZ-A- 200 273
- US-A- 4 983 139
- US-A- 5 135 429
- US-A- 6 042 453
- David Burns ET AL: "Honey Bee Candy Board", www.honeybeesonline.com/honey-bee-candy-bo ard, 18 April 2015 (2015-04-18), pages 1-4, XP055246085, Retrieved from the Internet: URL:https://web.archive.org/web/2015041812 3951/http://www.honeybeesonline.com/honey- bee-candy-board/ [retrieved on 2016-01-29]

## Description

The present invention relates to a device for the nutrition of bees.

In particular, the present invention relates to a device for the nutrition of bees during the winter period.

Therefore, the present invention belongs to the field of beekeeping. Today, in that field of beekeeping it is known to feed the bees during the winter by placing a candy material reserve in the hives.

This candy is packaged in a bag which has the function of preserving the candy from exterior contamination, both before and during use.

When placed in the hive, the operator creates a passage for the bees by operating a cut or a hole in the bag, generally in a central position thereof. The bag is placed over the honeycomb cover, with the passage oriented so as to be accessible through the hole of honeycomb cover.

For eating, the bees enter the bag through the passage to access the candy. This traditional technique has numerous drawbacks.

In particular, the passage allows access to a limited number of bees at a time, particularly in the initial stages of the nutrition period when the bees have not yet formed a hollow compartment in the candy.

In advanced stages of the period of operation of such a conventional device, the compartment formed by the bees in the candy tends to be invaded from the bag.

In fact, the latter collapses if it is not supported by the candy and generally hampers or prevents access to the candy parts more distant from the passage.

A device for the nutrition of bees, with technical features that can be considered the closest state of the art to the following invention, features that are present in the preamble of the attached claim 1, are described, for example, in the documents: David Burns ET AL: "Honey Bee Candy Board" https://web.archive.org/web/20150418123951/http:// www.honebeesonline.com/hone-bee-cand-board/, 18 April 2015, and in the patent documents US6042453A, EP0062955A1 and US4983139A.

The problem underlying the present invention is to make more efficient the bee nutrition during the winter.

Main aim of the present invention is to provide a device for the nutrition of bees which provides for a solution to this problem by overcoming the complained drawbacks of the device described above.

Within this aim, it is a task of the present invention to propose a device for the nutrition of bees which allows an easier access to nutritional material than the conventional device.

Another task of the present invention is to provide a device for the nutrition of bees that allows the simultaneous nutrition to a greater number of bees than the conventional device.

Another object of the invention is to propose a device for the nutrition of bees that allows a high accessibility to stable nutritional material and substantially constant throughout the period of use of the device for nutrition.

Another object of the present invention is to provide a device for the nutrition of bees that allows, since the device installation, the simultaneous feeding of a greater number of bees than the conventional device.

This aim, along with these and others tasks that will become apparent hereinafter, are achieved by a device for the nutrition of bees according to the present invention, which is as defined in appended claim 1.

Detail features of the device for the nutrition of bees according to the invention are disclosed in the dependent claims.

Further characteristics and advantages of the invention will become apparent from the description of the device for the nutrition of bees according to the invention, illustrated only by way of example in the accompanying drawings, in which:

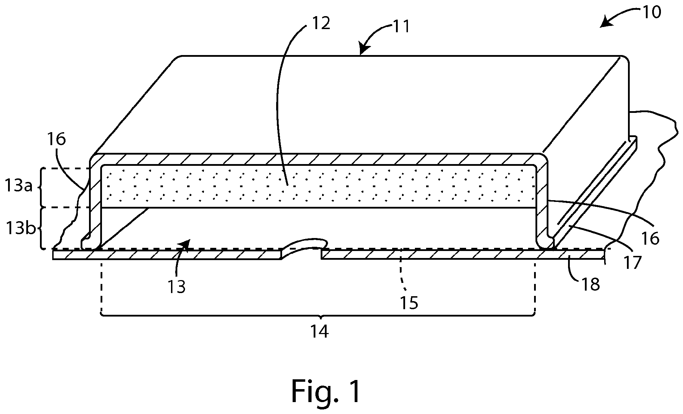

- Figure 1 shows a device for the nutrition of bees, according to the present invention, in an isometric cutaway view.

With particular reference to the above figure, it is globally identified with numeral 10 a device for the nutrition of bees comprising a container 11 and a nutritious material 12 for feeding bees which form a body that has a stable form.

Preferably the nutrient material comprises candy, which is per se traditional. The nutrient material 12 is housed in the container 11.

According to the present invention, the device 10 has a particular peculiarity in that the container 11 has an internal compartment 13 that has a first part 13a, in which is fixed the nutritional material 12, and a second portion 13b free from the nutrient material 12 so that bees can get in to feed on the nutrient material.

The container 11, according to the present invention is provided with an opening 14 which faces the second part 13b of the compartment 13 to allow bees to access to the latter.

To preserve the nutritional material before use of the device 10, the latter advantageously comprise a closing element 15 fixed to the container 11 so as to close the opening 14.

Preferably the closure element 15 seals the opening 14.

Furthermore, to make easier the opening of the device 10, preferably the closure element 15 is provided with at least one yieldable portion along which it can be broken to free the opening 14 or at least a part thereof. Alternatively, it can be the container 11 itself to be provided with at least a yieldable portion so that it can be broken in correspondence of the latter to at least partially remove the closure element 15 from the opening 14.

To maintain stable the second part 13b of the compartment 13, it is defined by rigid walls 16 of the container 11 which, for making easier the access to the nutritive material advantageously define a supporting portion 17 in such a way that in a use condition, in which the device 10 is supported on a supporting surface 18 by means of the supporting portion 17, the second part 13b of the compartment 13 is positioned between the support surface 18 and the nutritive material 12 so that the latter is accessible from below through the second part 13b of the compartment 13.

The container 11 is preferably configured in such a way that, in the use configuration, the size of the container 11 in height, with respect to the supporting surface 18, is substantially not more than 5 cm, this making it easy to be hosed in all the hives having standard dimensions.

To provide for easy production, easy handling and quick installation of the device 10 according to the present invention, the container 11 is shaped as a pan and is made of a material such as to maintain its shape under the weight of the nutritional material 12.

In such a case, of which an example is shown in Figure 1, the first part 13a of the compartment 13 is defined by the bottom of the basin and the opening 14 is defined by the free edge, opposite to said bottom, of the walls 16 which in that case are the side walls of the pan.

In this figure, the closing element 15 is represented in dashed line because in the shown use configuration it is preferably absent because it has been removed before placing the container 11 to the supporting surface 18.

The supporting portion 17 is defined by said free edge of the walls 16.

Advantageously the pan will have standardized dimensions according to EN 631.

In particular it was found particularly suitable for use a container 11 size of ¼ GASTRONORM, in that case being housed therein 1.5 kg of nutritional material.

The closure element 15 is preferably made with a removable or yieldable film which is sealed on the opening 14.

In that case in which the container 11 is formed by the pan, the closure element preferably consists of a sealing film attached to the edge of the pan preferably by heat sealing.

In this way, the container is easily openable.

Advantageously, to make the container 11 easily produced and possibly recyclable, it is made up of a polymeric material to contain the nutritional material 12 and to which the latter is fixable.

In particular, the polymeric material is selected from polypropylene or polyethylene and preferably the high density polyethylene.

The container 11 advantageously has at least one transparent portion to allow to inspect, from the outside of the container 11, the inside of the compartment 13 to be able to check the status of the nutritive material 12 consummation and to detect any problem or difficulty in the bee feeding process.

By making the container of plastics it is obtained that it provides for a thermal insulation during the winter that facilitates the survival and proliferation of bees.

Furthermore, by means of a device according to the present invention, during the use of the same it tends to form condensation within the container 11 so that the nutritive material 12 is moistened and softened thus facilitating the bee nutrition.

It is therefore clear how a device for the nutrition of bees according to the present invention achieves the mentioned aim and purposes.

In particular, the use of a device for the nutrition of bees according to the present invention allows to greatly reduce the risk of bees death during nutrition in winter period.

Furthermore, a device for the nutrition of bees according to the present invention has the advantage of being able to be positioned directly above the frames of the beehive once the cover-honeycomb has been removed. Where the constructional features and techniques mentioned in the following claims are followed by reference signs or numbers, such signs and reference numbers have been provided with the sole purpose of increasing the intelligibility of the claims and consequently they do not constitute in any way a limit to the interpretation of each element identified, purely by way of example, by such signs and reference numbers.

## Claims

1. Device (10) for the nutrition of bees comprising a container (11) and a nutritive material (12) for feeding bees that forms a body which is of stable shape, said nutritive material (12) being housed in said container (11), said container (11) being shaped as a pan and being made up of a polymeric material suitable to maintain its shape under the weight of said nutritive material (12), wherein said polymeric material is also suitable to contain said nutritive material (12) and to which the latter is fixable, wherein said container (11) has an internal compartment (13) with a first part (13a) in which is fixed said nutritive material (12) and a second part (13b) free from said nutritive material (12), wherein said container (11) is provided with an opening (14) facing the second part (13b) of said compartment (13) to allow bees accessing to the latter, the first part (13a) of said compartment (13) being defined by the bottom of the pan and said opening (14) being defined by a free edge of the side walls (16) of the pan, opposite to said bottom; and wherein the second part (13b) of said compartment (13) is delimited by rigid walls (16) of said container (11), said rigid walls (16) defining a support portion (17) in such a way that in a use configuration wherein said device (10) is supported on a support surface (18) by said supporting portion (17), the second part (13b) of said compartment (13) is positioned between said support surface (18) and the nutritive material (12) so that the latter is accessible from below, through said second part (13b) of said compartment (13); said device (10) comprises a closure element (15) fixed to said container (11) so as to close said opening (14), **characterized in that** said polymeric material is selected from polypropylene, polyethylene and high density polyethylene.

2. Device (10) according to claim 1, **characterized in that** said closure element (15) and/or said container (11) is/are provided with at least a yielding portion to facilitate the breaking and/or removal of said closure element (15) for the removal thereof from said opening (14) to allow the bees accessing to the second part (13b) of said compartment (13).

3. Device (10) according to one of the previous claims, **characterized in that** said container (11) is configured such that, in said use configuration, the height of said container (11), with respect to said support surface (18), is not more than 5 cm.

4. Device (10) according to one of the previous claims, **characterized in that** said closure element (15) comprises a sealing film sealed to said edge of the side walls (16) of the pan.

5. Device (10) according to one of the previous claims **characterized in that** said container (11) has at least one transparent portion to allow to see inside said compartment (13) from outside said container (11).

## Patentansprüche

1. Gerät (10) zur Ernährung von Bienen, das einen Behälter (11) und ein Nährmaterial (12) zur Fütterung von Bienen umfasst, das einen formstabilen Körper bildet, wobei das besagte Nährmaterial (12) in dem besagten Behälter (11) untergebracht ist, wobei der besagte Behälter (11) die Form einer Schale hat und aus einem polymeren Material besteht, das geeignet ist, seine Form unter dem Gewicht des besagten Nährmaterials (12) beizubehalten, wobei das besagte polymere Material auch geeignet ist, das besagte Nährmaterial (12) zu enthalten, und an dem letzteres befestigt werden kann, wobei der Behälter (11) ein Innenfach (13) mit einem ersten Teil (13a), in dem das Nährmaterial (12) befestigt ist, und einem zweiten Teil (13b), der frei von dem Nährmaterial (12) ist, aufweist, wobei der Behälter (11) mit einer Öffnung (14) versehen ist, die dem zweiten Teil (13b) des Fachs (13) zugewandt ist, um den Bienen den Zugang zu letzterem zu ermöglichen, wobei der erste Teil (13a) des Fachs (13) durch den Boden der Schale definiert ist und die Öffnung (14) durch einen freien Rand der Seitenwände (16) der Schale gegenüber dem Boden definiert ist; und wobei der zweite Teil (13b) des Fachs (13) durch starre Wände (16) des Behälters (11) begrenzt ist, wobei die starren Wände (16) einen Stützabschnitt (17) in einer solchen Weise definieren, dass in einer Gebrauchskonfiguration, in der die Vorrichtung (10) auf einer Stützfläche (18) durch den Stützabschnitt (17) gestützt wird der zweite Teil (13b) des Fachs (13) zwischen der Stützfläche (18) und dem Nährstoff (12) angeordnet ist, so dass letzterer von unten durch den zweiten Teil (13b) des Fachs (13) zugänglich ist; das besagte Gerät (10) ein Verschlusselement (15) umfasst, das an dem Behälter (11) befestigt ist, um die Öffnung (14) zu verschließen, **dadurch gekennzeichnet dass** das besagte Polymermaterial Polypropylen, Polyethylen und hoher Dichte ausgewählt ist.

2. Gerät (10) nach Anspruch 1, **dadurch gekennzeichnet, dass** das besagte Verschlusselement (15) und/oder der besagte Behälter (11) mit mindestens einem nachgiebigen Teil versehen ist/sind, um das Brechen und/oder Entfernen des besagten Verschlusselements (15) zu erleichtern, um es von der besagten Öffnung (14) zu entfernen und den Bienen den Zugang zum zweiten Teil (13b) des besagten Fachs (13) zu ermöglichen.

3. Gerät (10) nach einem der vorhergehenden Ansprüche, **dadurch gekennzeichnet, dass** der besagte Behälter (11) so gestaltet ist, dass in der besagten Gebrauchskonfiguration die Höhe des besagten Behälters (11) in Bezug auf die besagte Auflagefläche (18) nicht mehr als 5 cm beträgt.

4. Gerät (10) nach einem der vorhergehenden Ansprüche, **dadurch gekennzeichnet dass** das besagte Verschlusselement (15) eine mit dem besagten Rand der Seitenwände (16) der Schale versiegelte Folie umfasst.

5. Gerät (10) nach einem der vorhergehenden Ansprüche, **dadurch gekennzeichnet, dass** der besagte Behälter (11) mindestens einen transparenten Teil aufweist, der es ermöglicht, von außerhalb des besagten Behälters (11) in das besagte Fach (13) zu sehen.

## Revendications

1. Dispositif (10) pour la nutrition des abeilles comprenant un conteneur (11) et une matière nutritive (12) pour nourrir les abeilles qui forme un corps qui est de forme stable, ladite matière nutritive (12) étant logée dans ledit conteneur (11), ledit conteneur (11) ayant la forme d'une casserole et étant constitué d'une matière polymère appropriée pour maintenir sa forme sous le poids de ladite matière nutritive (12), dans lequel ladite matière polymère est également appropriée pour contenir ladite matière nutritive (12) et à laquelle cette dernière peut être fixée, dans lequel ledit conteneur (11) a un compartiment interne (13) avec une première partie (13a) dans laquelle est fixée ladite matière nutritive (12) et une deuxième partie (13b) exempte de ladite matière nutritive (12), dans lequel ledit conteneur (11) est pourvu d'une ouverture (14) faisant face à la deuxième partie (13b) dudit compartiment (13) pour permettre aux abeilles d'accéder à ce dernier, la première partie (13a) dudit compartiment (13) étant définie par le fond de la casserole et ladite ouverture (14) étant définie par un bord libre des parois latérales (16) de la casserole, opposé audit fond; et dans lequel la deuxième partie (13b) dudit compartiment (13) est délimitée par des parois rigides (16) dudit conteneur (11), lesdites parois rigides (16) définissant une partie de support (17) de telle sorte que dans une configuration d'utilisation dans laquelle ledit dispositif (10) est supporté sur une surface de support (18) par ladite partie de support (17), la deuxième partie (13b) dudit compartiment (13) est positionnée entre ladite surface de support (18) et la matière nutritive (12) de sorte que ce dernier est accessible par le dessous, à travers ladite deuxième partie (13b) dudit compartiment (13); ledit dispositif (10) comprend un élément de fermeture (15) fixé audit conteneur (11) de manière à fermer ladite ouverture (14), **caractérisé en ce que** ladite matière polymère est choisi parmi le polypropylène, le polyéthylène et le polyéthylène haute densité.

2. Dispositif (10) selon la revendication 1, **caractérisé en ce que** ledit élément de fermeture (15) et/ou ledit conteneur (11) est/sont pourvus d'au moins une partie souple pour faciliter la rupture et/ou le retrait dudit élément de fermeture (15) pour le retirer de ladite ouverture (14) afin de permettre aux abeilles d'accéder à la deuxième partie (13b) dudit compartiment (13) .

3. Dispositif (10) selon l'une des revendications précédentes, **caractérisé en ce que** ledit conteneur (11) est configuré de telle sorte que, dans ladite configuration d'utilisation, la hauteur dudit conteneur (11), par rapport à ladite surface de support (18), n'est pas supérieure à 5 cm.

4. Dispositif (10) selon l'une des revendications précédentes, **caractérisé en ce que** ledit élément de fermeture (15) comprend un film d'étanchéité scellé sur ledit bord des parois latérales (16) de la casserole.

5. Dispositif (10) selon l'une des revendications précédentes, **caractérisé en ce que** ledit conteneur (11) comporte au moins une partie transparente pour permettre de voir l'intérieur dudit compartiment (13) depuis l'extérieur dudit conteneur (11).
